# EUROPÄISCHE PATENTSCHRIFT

(11) **EP 3 954 533 B1**
(45) Veröffentlichungstag und Bekanntmachung des Hinweises auf die Patenterteilung: **02.04.2025**
(21) Anmeldenummer: 21187634.7
(22) Anmeldetag: 26.07.2021
(51) Int. Cl.: B29D 30/06, B26D 1/00, B26D 3/28, B26D 7/26, B25J 11/00

(54) **SCHNEIDWERKZEUG UND SCHNEIDVERFAHREN FÜR DEN VULKANISATIONSGRAT EINES REIFENS**
CUTTING DEVICE AND METHOD FOR CUTTING THE FLASH OF A TIRE
DISPOSITIF ET PROCÉDÉ DE COUPE POUR LA BAVURE D'UN PNEU

(30) Priorität: 07.08.2020 PT 2020116632
(43) Veröffentlichungstag der Anmeldung: 16.02.2022
(73) Patentinhaber: Continental Reifen Deutschland GmbH, 30175 Hannover (DE)
(72) Erfinder: Miranda, Pedro, 30419 Hannover (DE); Moreira, Eduardo João, 30419 Hannover (DE); Monteiro, João, 30419 Hannover (DE); Sousa, Bruno, 30419 Hannover (DE)
(74) Vertreter: Continental Corporation

(56) Entgegenhaltungen:
- WO-A1-2007/106961
- CN-A- 104 493 841
- CN-A- 107 791 422
- CN-A- 108 515 650
- DE-T5- 112009 002 549
- GB-A- 1 128 457
- GB-A- 384 381
- US-A- 1 148 552
- US-A- 1 517 395
- US-A- 3 618 654
- TONSHOFF H K ET AL: "OFF-LINE-PROGRAMMIERSYSTEM ZUM REIFENSCHNEIDEN. ÖRAPID PROTOTYPING VON PKW-VERSUCHSREIFEN", WERKSTATTSTECHNIK, SPRINGER VERLAG. BERLIN, DE, vol. 86, no. 1/02, 1 January 1996 (1996-01-01), pages 19, XP000551789, ISSN: 0340-4544

## Beschreibung

### TECHNISCHER GELTUNGSBEREICH

Die vorliegende Beschreibung bezieht sich auf ein Trimmwerkzeug für Reifen. Insbesondere bezieht sie sich auf ein Werkzeug und die entsprechende Arbeitsweise zum Beschneiden von Reifengraten, das eine wirksamen Entfernung von überschüssigen Gummikomponenten ermöglicht, die sich aus dem Vulkanisationsverfahren des Reifens ergeben.

### HINTERGRUND

Die Vulkanisationsformen für Reifen weisen eine große Anzahl von Kanälen mit kleinem Durchmesser auf, die den Luftaustritt entweder aus der gesamten Reifenstruktur oder der zwischen der Form und dem zu vulkanisierenden Reifenrohling befindlichen Luft ermöglicht. Nach der Vulkanisation sind diese Kanäle teilweise mit Gummi gefüllt, so dass dieser Gummiüberschuss auf der Reifenoberfläche zurückbleibt. Zusätzlich zu diesem Gummiüberschuss auf der Reifenoberfläche befindet sich weiteres überschüssiges Material auf der Reifenwulst. Der überschüssige, als Reifengrat bezeichnete Gummi, muss entfernt werden, um die Geräuschemission zu reduzieren und einen guten Reifensitz auf der Felge zu gewährleisten, um den Luftaustritt zu verhindern. Das Verfahren zur Entfernung des Reifengrats besteht im Allgemeinen darin, den Reifen an einer Maschine zu drehen und diesen Gummiüberschuss manuell mithilfe eines V-förmigen beweglichen Messers zu entfernen.

Das Dokument US10011054 beschreibt ein Schneidwerkzeug zum Trimmen einer Lauffläche eines Reifens, das eine Schneidplatte beinhaltet, die eine Vielzahl von Schneidschlitzen aufweist, welche nacheinander an einem unteren Ende gebildet werden, um den überschüssigen Gummi (Grate) abzuschneiden, der sich auf der Lauffläche eines Reifens gebildet hat, sowie einen an der Schneidplatte befestigten Griff, der für den Benutzer vorgesehen ist, um das erwähnte Werkzeug zum Schneiden des erwähnten überschüssigen Gummis zu halten. Die Schneidplatte verfügt über eine Vielzahl von auf der Rückseite gebildeten Nuten, um den geschnittenen Gummi vertikal durch die Schneidschlitze zu führen und abzuleiten.

Es bestehen noch andere Lösungen, bei welchen das System zur Entfernung der Grate automatisch ist.

Das Dokument CN108515650 beschreibt eine Entgratungsvorrichtung für eine Seitenfläche eines Reifens. Die Vorrichtung besteht aus zwei symmetrischen Schneidwerkzeugsätzen für die linke und rechte Seite, einer Baugruppe einer Fahrstruktur, einem Reifen und einem Kugelgewindetrieb. Die Schneideeinheiten werden an der Baugruppe der Fahrstruktur installiert und sind auf beiden Seiten des Reifens angeordnet; die durch den Kugelgewindetrieb angetriebene Öffnungs- und Schließbewegung wird an der Baugruppe der Fahrstruktur durchgeführt, um den Abstand von der Seitenfläche des Reifens zu kontrollieren.

Das Dokument CH598003 beschreibt ein Schneidwerkzeug. Das Werkzeug besteht aus Schneidelementen, die sich radial entlang der Seitenwand der rotierenden Reifen befinden. Die Schneideelemente weisen Schneidmesser mit Kanten auf, die mit den Seitenwänden des Reifens in Kontakt kommen, um das überschüssige Polymer (Grate) zu entfernen. Das Gerät besteht aus einem Paar von auf Armen montierten Schneidwerkzeugen, die sich radial entlang der Seitenwände der Reifen bewegen. Die Arme werden entlang der Seitenwände bewegt und von Antennen gesteuert. Die Reifen werden von drei am Umfang verteilten Rollen angetrieben und seitlich von zwei transversalen Registerwalzen geführt.

Das Dokument CN105014848 beschreibt eine automatische Schneidvorrichtung für einen Reifen. Die Vorrichtung besteht aus einem Rahmen der Schneidmaschine, einem Positioniermechanismus des Schnitts sowie aus einem Drehmechanismus und Schaberbaugruppen. Der Positioniermechanismus des Trimmers, der Drehmechanismus und die Schaberbaugruppen sind alle auf dem Rahmen der Schneidmaschine montiert. Die Schaberbaugruppen werden zum Trimmen der Reifenoberfläche und der beiden Seiten des Reifens verwendet.

Das Dokument CN106671325 beschreibt eine Produktionslinie zum Entgraten der Reifenoberfläche, die eine Rollenachsen-Transportlinie und eine Vielzahl von Entgratstationen umfasst. Die mehrfachen Entgratstationen sind nacheinander entlang der Rollenachsen-Transportlinie angeordnet. Jede Entgratstation besteht aus einer rotierenden Ausbuchtung, wobei mindestens ein Entgratungsmanipulator noch auf der Außenseite der rotierenden Ausbuchtung angeordnet ist. Jeder Entgratungsmanipulator besitzt zwei Drehfedern, die symmetrisch auf einem Rahmen angeordnet sind. Jede Drehfeder ist mit dem ersten Ende einer Drehmomentstütze verbunden, das zweite Ende jeder Drehmomentstütze ist mit einem Ende eines Messerwellenarms verbunden; die anderen Enden beider Messerwellenarme werden durch eine Messerwelle verbunden; eine Vielzahl von Messerköpfen wird sequenziell in axialer Richtung der Messerwelle überlagert; und die Laufräder sind noch am oberen Ende und unteren Ende der Messerwelle angeordnet. Die Torsionskraft wird durch die Drehfedern aufgebracht, die Messerwelle liegt durch eine bestimmte Spannung fest an der Seitenfläche eines Reifens an, die Tatsache, dass die Entgratwerkzeuge der Messerwelle immer Kontakt mit der Seitenfläche des Reifens haben, gewährleistet, dass die Entgratwerkzeuge die Entgratarbeiten durchführen können.

Das Dokument GB1495209 bezieht sich auf einen Trimmer zum Entfernen von überschüssigem geschmolzenem Polymer an einem Reifen, der eine Stützvorrichtung des Reifens aufweist, in der ein Reifen zur Drehung um seine Achse aufgenommen wird, sowie eine Schneidvorrichtung mit Schneidwerkzeugen besitzt, die für die Bewegung entlang der Reifenoberflächen angebracht sind. Jedes Schneidwerkzeug hat eine oder mehrere geformte Kanten, um sich an die Reifenoberflächen anzupassen, sowie eine oder mehrere Führungsrollen im Schneidbereich, um das Schneidwerkzeug in Verbindung mit einem zu trimmenden Reifen zu führen. Die Schneidwerkzeuge der Vorrichtungen zum Trimmen der Seitenwände des Reifens sind auf einer Platte montiert, die an einer verschiebbaren Führungsstange befestigt ist, welche im Betrieb von einem Pneumatikzylinder bewegt wird, um das Schneidwerkzeug in Kontakt mit dem Reifen zu bringen.

Die US1148552A bezieht sich auf Verbesserungen von Werkzeugen oder Geräten, zum Treten oder Schneiden von Teilen einer Reifenkarkasse oder eines Reifenschuhs, zum Reparieren von Reifenplatzern oder Reifenpannen. Bei der Reparatur von Reifenpannen oder Reifenpannen in Reifenkarkassen oder - backen werden die Schichten, aus denen die Reifenkarkasse besteht, in der Nähe der Ausblasöffnung abgestuft oder weggeschnitten, d. h. jede innere Schicht wird so geschnitten, dass sie über einen erheblichen Teil nach innen über die nächste äußere Schicht hinausragt.

Ferner beschreibt die US1517395A das Schneiden, Werkzeuge der Art, die besonders zum Schneiden von Konstruktionen in den Laufflächen von Fahrzeugreifen geeignet sind, um solche Reifenlaufflächen nach Abnutzung zu regrooviiia und für ähnliche zu verwenden.

Die GB384381A betrifft Verbesserungen an oder im Zusammenhang mit Umformmustern an Gummiwaren, einschließlich Reifen, sowie deren Wartung und Aufhängung; der Reifenlaufflächen in gutem Zustand.

Ferner bezieht sich die CN107791422A auf das technische Gebiet der Reifenverarbeitung und insbesondere auf einen Haarreparaturmechanismus.

Die vorliegende Beschreibung stellt eine Lösung dar, die ein wirksameres Beschneiden der Grate ermöglicht, wobei die Erkennung jedes Grats automatisch erfolgt.

Diese Fakten werden beschrieben, um das technische Problem zu veranschaulichen, das durch die Ausführungen in diesem Dokument gelöst wurde.

### ALLGEMEINE BESCHREIBUNG

Die vorliegende Veröffentlichung betrifft ein Werkzeug und die entsprechende Arbeitsweise zum Beschneiden von Reifengraten.

Das Ziel der bisherigen Ausführungen ist es, eine Lösung zum Schneiden von Graten (überschüssiges Polymer) zu bieten, die nach dem Entfernen des Reifens aus der Vulkanisationsform auf der Schulter, der Lauffläche und der Reifenwulst zurückbleiben.

Gemäß Anspruch 1 betrifft die Erfindung ein Schneidwerkzeug für den Vulkanisationsgrat des Reifens, das eine Halterung für einen abnehmbaren Schneideinsatz und den genannten abnehmbaren Schneideinsatz enthält;
in dem die Halterung einen länglichen Körper aufweist mit einem ersten Teil, um das Werkzeug an einem Roboterarm zu befestigen, einem zweiten gebogenen Teil und einem dritten Teil, um auf dem Reifen zu gleiten und den Grat zu abzuschneiden;
in dem der zweite Teil den ersten Teil und den dritten Teil miteinander verbindet;
in dem der dritte Teil eine Aussparung zur Aufnahme des abnehmbaren Schneideinsatzes aufweist;
in dem der abnehmbare Schneideinsatz zwei V-förmige Schneidkanten aufweist, um den Grat zwischen den genannten Schneidkanten zu schneiden;
in dem der Scheitelpunkt des "V" in einer Richtung entlang der Halterung, gegenüber dem ersten Teil ausgerichtet ist.

Die Schnittform dieses Werkzeugs erlaubt ein Ziehen des Grats, welches eine Selbstführung des Werkzeug ermöglicht und damit eine Verdrehung verhindert, im Gegenteil zu einer Schnittmethode, die den Grat wegdrücken würde.

Bei einer Ausführung ist der erste Teil des Schneidwerkzeugs in zwei Abschnitte unterteilt, die miteinander einen stumpfen Winkel von 150-175 Grad, vorzugsweise zwischen 160-170 Grad bilden.

Bei einer Ausführung weist der zweite Teil des Schneidwerkzeugs einen stumpfen Winkel zwischen 135-175 Grad, vorzugsweise zwischen 150-170 Grad auf.

Bei einer Ausführung liegt der Winkel des ersten Teils des Werkzeugs in entgegengesetzter Richtung zum Winkel des zweiten Teils des Werkzeugs.

Der Winkel des zweiten Teils des Werkzeugs (α) erlaubt, dass das Werkzeug gleitet, ohne dass die Halterung am Reifen schabt. Der Winkel des ersten Teils des Werkzeugs (β) sorgt für eine bessere Zweckmäßigkeit des Werkzeugs, sodass sich das Werkzeug in tangentialer Richtung des Reifens befindet. Dieser Winkel bewirkt, dass das Werkzeug eine "S"-Form aufweist.

Bei einer Ausführung verjüngt sich der dritte Teil der Halterung entlang des Körpers der Halterung in Richtung des Endes gegenüber dem ersten Teil.

Bei einer Ausführung ist das Ende des dritten Teils der Halterung abgerundet.

Die Tatsache, dass das Schneidwerkzeug ein abgerundetes Ende im dritten Teil sowie eine Biegung im zweiten Teil der Halterung aufweist, ermöglicht, dass der abnehmbare Schneideinsatz nicht in den Reifen eindringt und ihn somit nicht beschädigt. Falls der Winkel der Biegung nicht zwischen 135 und 175 Grad variieren würde, würde der Reifen beschädigt werden.

Bei einer Ausführung weist die Aussparung eine Nut an den Seiten auf, um den abnehmbaren Schneideinsatz aufzunehmen und zu fixieren.

Bei einer Ausführung sind die Schneidkanten des Schneideinsatzes gerade.

Die geraden Kanten ermöglichen ein wirksameres Beschneiden der Grate und verringern die Möglichkeit des Entstehens von Schäden am Reifen.

Bei einer Ausführung besteht der Schneideinsatz aus Wolframcarbid. Die Wahl dieses Materials für die Herstellung der Schneideinsätze ermöglicht einen geringeren Verschleiß während des gesamten Lebenszyklus des genannten Schneideinsatzes, wobei dieser häufiger verwendet werden kann, als bei der Verwendung eines anderen Materialtyps.

Wahlweise können andere Materialien, wie beispielsweise Stahllegierungen verwendet werden.

Bei einer Ausführung besteht die Halterung aus Stahl. Wahlweise können andere Materialien, vorzugsweise Aluminium, gewählt werden.

Bei einer Ausführung wird der Schneideinsatz CNC-bearbeitet und durch Drahterosion geschnitten.

Bei einer Ausführung wird der Schneideinsatz durch Sintern gebildet.

Ein weiterer Aspekt der Ausführung bezieht sich auf einen drehbaren Schneidkopf für den Vulkanisationsgrat des Reifens, d. h. einen Schneidkopf, der in der Lage ist, sich zu drehen und aus einer Vielzahl der bereits beschriebenen Werkzeuge besteht, die zum Schneiden des jeweiligen Grats angeordnet sind.

Die Verwendung eines oder mehrerer Schneidwerkzeuge ermöglicht eine Verringerung der Stillstände für den Wechsel der Schneideinsätze. Sobald ein Schneideinsatz verschlissen ist, kann ein anderes Werkzeug ausgewählt werden, das einen noch ordnungsgemäß funktionierenden Schneideinsatz aufweist, indem das Werkzeug so gedreht wird, dass der gewünschte Schneideinsatz zum zu schneidenden Grat ausgerichtet ist.

Bei einer Ausführung besitzt der Schneidkopf für den Vulkanisationsgrat des Reifens eine Basis, auf der die Werkzeuge montiert und am Umfang verteilt sind.

Ein weiterer Aspekt der Ausführung bezieht sich auf einen Roboterarm mit dem bereits erwähnten Schneidkopf für den Vulkanisationsgrat des Reifens, der am Roboterarm befestigt ist.

Bei einer Ausführung besitzt der Roboterarm ein Absaugsystem für das überschüssige Polymer, das von den Werkzeugen abgeschnitten wird.

Mit diesem Absaugsystem kann der Grat automatisch vom Roboterarm entfernt werden, nachdem er vom Reifen abgeschnitten wurde. Aufgrund der Art und Weise, wie der Grat mit diesem Werkzeug geschnitten wird, ist die Absaugung wirksamer ohne eine Verdrehung des Grats. Diese Absaugung erlaubt zusätzlich, dass der Reifen nicht mit dem Grat im Inneren zur nächsten Etappe übergeht, und somit bleibt der Arbeitsbereich sauber und verhindert die Gummiansammlungen am Schneidwerkzeug.

Ein weiterer Aspekt der Erfindung (siehe Anspruch 17) bezieht sich auf eine Methode zum Schneiden des Vulkanisationsgrats eines Reifens bei einem Reifen-Rotationssystem außerhalb des Reifens, das einen Roboterarm mit einem Schneidwerkzeug wie oben beschrieben umfasst, wobei die Methode aus den folgenden Schritten besteht:
Start der Reifenrotation;
Entlangziehen des Schneidwerkzeugs an einer rotierenden Reifenoberfläche durch den Roboterarm, sodass der dritte Teil auf dem Reifen gleitet, um den Grat zu schneiden.

Beim Entlangziehen des Schneidwerkzeugs, wird der Grat in die V-förmige Öffnung eingeführt, die von den Schneidkanten gebildet wird. In anderen Worten: Die Drehrichtung des Reifens stimmt mit der Richtung des Scheitelpunkts des "V" überein.

Es ist zu beachten, dass es ist wichtig ist, das Schneidwerkzeug zu ziehen, anstatt das Schneidwerkzeug zu drücken, um den Grat vom Reifen zu entfernen, da dieses eine bessere Stabilität, weniger Vibrationen, einen stabileren Schnitt und weniger Reifenschäden - unter anderen Vorteilen - ermöglicht.

Ein weiterer Aspekt der Ausführung bezieht sich auf eine Methode zum Schneiden des Vulkanisationsgrats eines Reifens bei einem Reifen-Rotationssystem außerhalb des Reifens, das einen Roboterarm mit Schneidkopf wie oben beschrieben umfasst, wobei die Methode aus den folgenden Schritten besteht:
Start der Reifenrotation;
Annäherung des Schneidkopfs durch den Roboterarm, um das Schneidwerkzeug an einer rotierenden Reifenoberfläche entlangzuziehen, sodass der dritte Teil auf dem Reifen gleitet, um den Grat zu schneiden.

Wenn ein Schneidwerkzeug in einer bevorzugten Ausführung verschlissen ist, besteht die Methode aus dem Schritt, den Schneidkopf so zu drehen, dass das gewünschte Schneidwerkzeug auf den zu schneidenden Grat ausgerichtet ist.

### KURZE BESCHREIBUNG DER ABBILDUNGEN

Zum besseren Verständnis sind im Anhang die Abbildungen beigefügt, die bevorzugte Ausführungen darstellen, jedoch nicht beabsichtigen, das Objekt dieser Beschreibung einzuschränken.
**Abbildung** 1: Schematische Darstellung einer Ausführung eines Schneidwerkzeugs, wobei (a) eine Seitenansicht des Werkzeugs und (b) eine Vorderansicht der Halterung darstellt.
**Abbildung 2****:** Schematische Darstellung einer Ausführung eines Schneidkopfes, der aus einer Vielzahl von Schneidwerkzeugen besteht, wobei (a) eine perspektivische Ansicht des Schneidkopfs und (b) eine Vorderansicht des Schneidkopfs darstellt, in der die Position des abnehmbaren Schneideinsatzes hervorgehoben wird.
**Abbildung 3****:** Schematische Darstellung einer Ausführung eines Schneidkopfs in der Draufsicht.
**Abbildung 4****:** Schematische Darstellung einer Ausführung des abnehmbaren Schneideinsatzes.
**Abbildung 5****:** Schematische Darstellung einer Ausführung eines Schneidkopfes, während er die Grate eines Reifens beschneidet.
**Abbildung 6****:** Schematische Darstellung einer Ausführung eines Schneidkopfes mit dem Schnitt im Kontaktbereich des Werkzeugs mit dem Reifen.
**Abbildung 7****:** Schematische Darstellung einer Ausführung eines Schneidwerkzeugs, während es die Grate eines Reifens beschneidet.
**Abbildung 8** - Schematische Darstellung einer perspektivischen Ansicht einer optionalen Ausführung eines Schneidkopfes.
**Abbildung 9** - Schematische Darstellung einer Vorderansicht einer optionalen Ausführung eines Schneidkopfes.
**Abbildung 10** - Schematische Darstellung einer Vorderansicht einer optionalen Ausführung eines Schneidkopfes.
**Abbildung 11** - Schematische Darstellung einer perspektivischen Ansicht einer optionalen Ausführung eines Schneidkopfes, der zusätzliche Schneidmesser aufweist.
**Abbildung 12** - Schematische Darstellung einer Vorderansicht einer optionalen Ausführung eines Schneidkopfes, der zusätzliche Schneidmesser aufweist.
**Abbildung 13** - Schematische Darstellung einer optionalen Ausführung eines Schneidkopfs mit zusätzlichen Schneidmessern in der Draufsicht.
**Abbildung 14** - Schematische Darstellung einer Vorderansicht einer optionalen Ausführung eines Schneidkopfes, der zusätzliche Schneidmesser aufweist.

### DETAILLIERTE BESCHREIBUNG

Die vorliegende Veröffentlichung stellt ein Schneidwerkzeug für den Vulkanisationsgrat des Reifens sowie einen Schneidkopf, einen Roboterarm, der ein Schneidwerkzeug oder einen Schneidkopf enthält, und die entsprechende Schneidmethode dar.

Die vorliegende Veröffentlichung bezieht sich auf ein Schneidwerkzeug für den Vulkanisationsgrat des Reifens, das eine Halterung für einen abnehmbaren Schneideinsatz und den genannten abnehmbaren Schneideinsatz enthält; in dem die Halterung einen länglichen Körper aufweist mit einem ersten Teil, um das Werkzeug an einem Roboterarm zu befestigen, einem zweiten gebogenen Teil und einem dritten Teil, um auf dem Reifen zu gleiten und den Grat abzuschneiden; in dem der zweite Teil den ersten Teil und den dritten Teil miteinander verbindet; in dem der dritte Teil eine Aussparung zur Aufnahme des abnehmbaren Schneideinsatzes aufweist; in dem der abnehmbare Schneideinsatz zwei V-förmige Schneidkanten aufweist, um den Grat zwischen den genannten Schneidkanten zu schneiden; in dem der Scheitelpunkt des "V" in einer Richtung entlang der Halterung, gegenüber dem ersten Teil ausgerichtet ist.

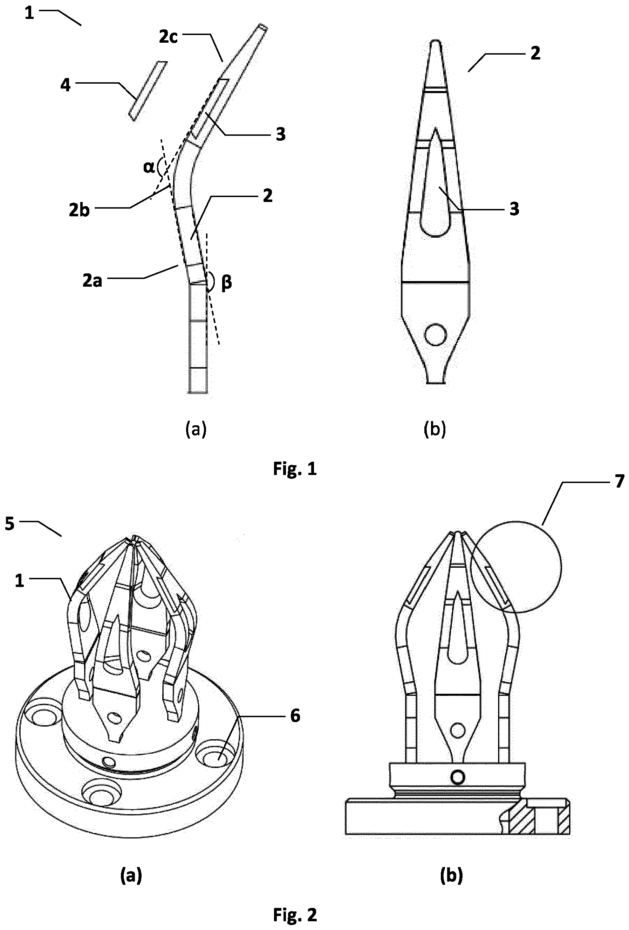

Die Abbildung 1(a) zeigt eine bevorzugte Ausführungsform des Schneidwerkzeugs (1) und des abnehmbaren Schneideinsatzes (4), in welcher der längliche Körper der Halterung (2) einen ersten Teil (2a) aufweist, um das genannte Werkzeug an einem Roboterarm zu befestigen, sowie einen zweiten gebogenen Teil (2b), um einen ersten und einen dritten Teil (2c) zu verbinden. Außerdem verfügt die Halterung über eine Aussparung (3) zum Einsetzen eines Schneideinsatzes (4). In Abbildung 1(b) ist die Halterung (2) in der Vorderansicht dargestellt und (3) stellt die Aussparung zum Einsetzen des Schneideinsatzes dar.

Bei einer bevorzugten Ausführung ist der erste Teil des Schneidwerkzeugs in zwei Abschnitte unterteilt, die einen stumpfen Winkel (β) bilden, der zwischen 150-175 Grad, vorzugsweise zwischen 160-170 Grad, variiert.

Bei einer bevorzugten Ausführung variiert der Winkel des zweiten Teils des Schneidwerkzeugs (α) zwischen 135-175 Grad, vorzugsweise zwischen 150-170 Grad.

Die Abbildung 2(a) zeigt eine bevorzugte Ausführungsform, bei welcher der drehbare Schneidkopf (5) eine Vielzahl von Schneidwerkzeugen (1) und Löchern (6) aufweist, um ihn durch Befestigungselemente am Roboterarm zu befestigen. Die Abbildung 2(b) stellt einen Ausschnitt (7) dar, in dem sich der Schneideinsatz befindet.

Bei einer bevorzugten Form besteht der drehbare Schneidkopf aus mindestens zwei Schneidwerkzeugen.

Bei einer bevorzugten Form befinden sich die Schneidwerkzeuge im mittleren Teil des Schneidkopfs.

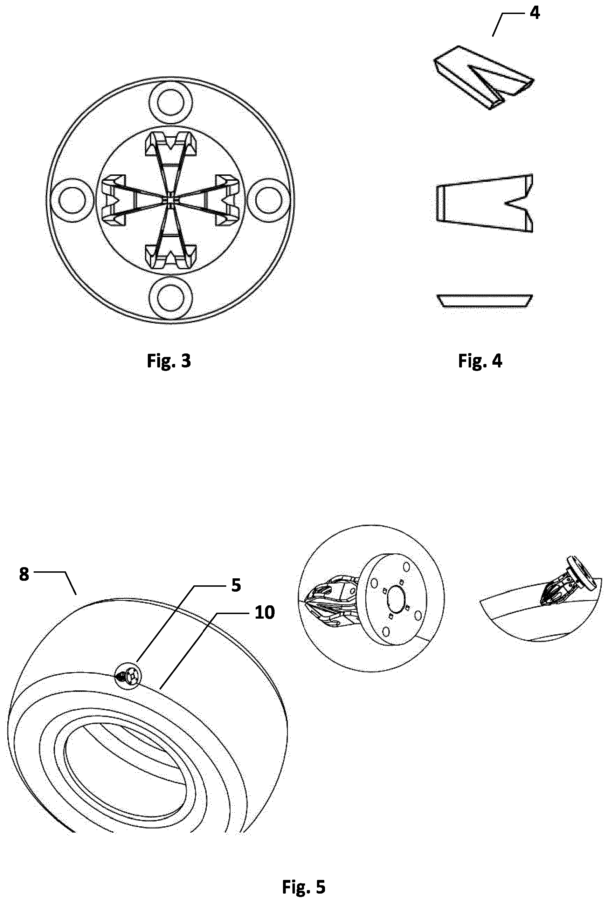

Die Abbildung 3 zeigt eine bevorzugte Ausführungsform des drehbaren Schneidkopfs, der eine Vielzahl von Schneidwerkzeugen aufweist.

Die Abbildung 4 zeigt verschiedene Ansichten des Schneideinsatzes (4), in denen seine V-förmige Geometrie erkennbar ist.

Die Abbildung 5 zeigt eine bevorzugte Ausführungsform des Schneidkopfs (5) mit dem Schneidwerkzeug auf der Reifenfläche (8), um den Grat (10) zu schneiden.

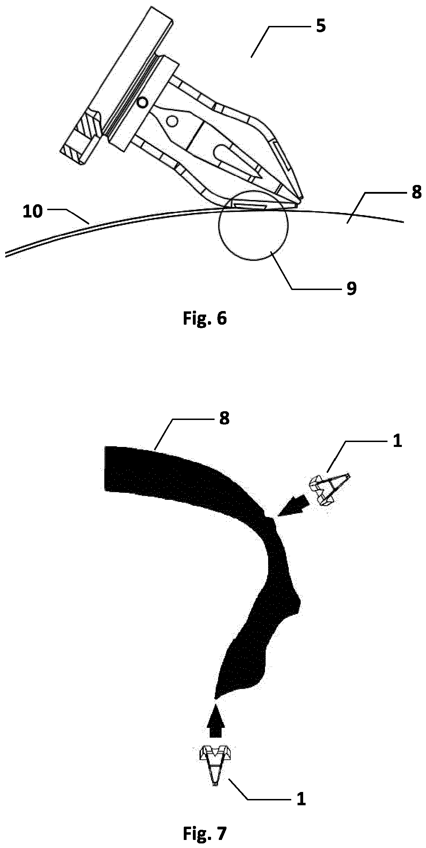

Die Abbildung 6 zeigt eine bevorzugte Ausführungsform, die eine Schnittansicht des Reifens (8) und der Kontaktfläche (9) des Schneidkopfwerkzeugs (5) mit dem genannten Reifen darstellt, wobei das genannte Schneidkopfwerkzeug (5) den Grat (10) beschneidet.

Die Abbildung 7 zeigt eine bevorzugte Ausführungsform des Schneidwerkzeugs (1), um den Grat an der Schulter und der Wulst eines Reifens (8) zu beschneiden, bei der das Werkzeug im oberen Teil der Abbildung den Grat an der Schulter des Reifens (8) und das Werkzeug im unteren Teil der Abbildung den Reifenwulst (8) beschneidet.

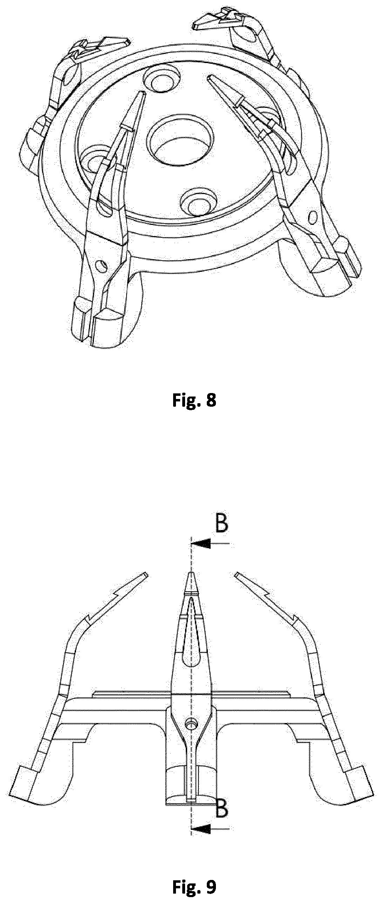

Die Abbildungen 8, 9 und 10 stellen eine optionale Ausführungsform des Schneidkopfs dar, bei der sich die genannten Schneidwerkzeuge an der Seite des Schneidkopfs befinden.

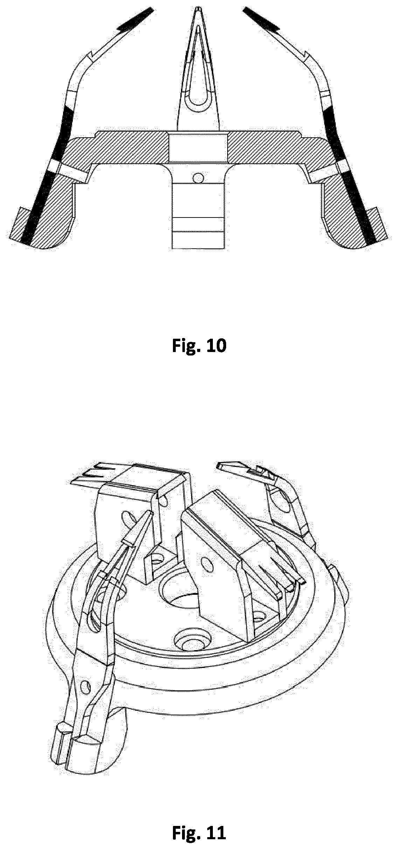

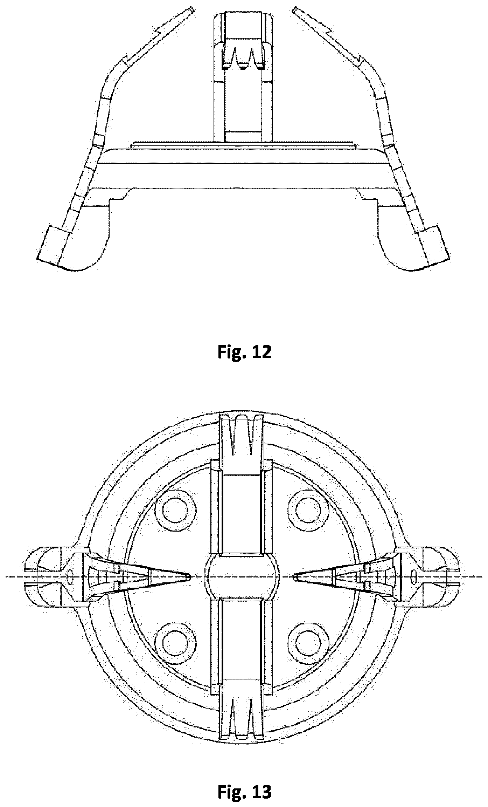

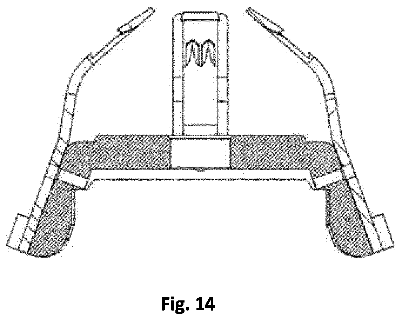

Die Abbildungen 11, 12, 13 und 14 stellen eine optionale Ausführungsform des Schneidkopfs dar, bei welcher der genannte Schneidkopf aus einer Vielzahl von Schneidwerkzeugen und Schneidmessern besteht, die wie in den Abbildungen dargestellt konfiguriert sind.

Bei einer optionalen Ausführungsform besteht der Schneidkopf aus zwei Schneidwerkzeugen und zwei Schneidmessern, die wie in Abbildung 11 dargestellt konfiguriert sind.

Der in diesem Dokument verwendete Begriff "besteht" oder "bestehend aus" ist dazu bestimmt, auf das Vorhandensein der erwähnten Merkmale, Elemente, Ganzzahlen, Schritte und Komponenten hinzuweisen, verhindert jedoch nicht das Vorhandensein oder Hinzufügen eines oder mehrerer anderer Merkmale, Elemente, Ganzzahlen, Schritte und Komponenten oder Gruppen derselben.

Die vorliegende Erfindung ist natürlich in keiner Weise auf die in diesem Dokument beschriebenen Ausführungen beschränkt, und eine Person mit durchschnittlichen Kenntnissen in dem Bereich kann je nach den Erfordernissen der jeweiligen Situation viele Möglichkeiten zur Modifizierung derselben und zum Ersetzen der technischen Merkmale durch andere gleichwertige Merkmale vorhersehen, wie in den beigefügten Ansprüchen definiert.

## Patentansprüche

1. Drehbarer Schneidkopf (5) für den Vulkanisationsgrat (10) eines Reifens (8), der aus mindestens zwei Schneidwerkzeugen (1) besteht, die zum Schneiden des jeweiligen Grats (10) angeordnet sind, **gekennzeichnet durch** zumindest ein Schneidwerkzeug (1) für den Vulkanisationsgrat des Reifens (8), das eine Halterung für einen abnehmbaren Schneideinsatz (4) und den genannten abnehmbaren Schneideinsatz (4) enthält;
in dem die Halterung einen länglichen Körper (2) aufweist mit einem ersten Teil (2a), um das Werkzeug an einem Roboterarm zu befestigen, einem zweiten gebogenen Teil und einem dritten Teil, um auf dem Reifen (8) zu gleiten und den Grat (10) zu abzuschneiden;
in dem der zweite Teil (2b) den ersten Teil (2a) und den dritten Teil miteinander verbindet;
in dem der dritte Teil (2c) eine Aussparung zur Aufnahme des abnehmbaren Schneideinsatzes (4) aufweist;
in dem der abnehmbare Schneideinsatz (4) zwei V-förmige Schneidkanten aufweist, um den Grat (10) zwischen den genannten Schneidkanten zu schneiden;
in dem der Scheitelpunkt des "V" in einer Richtung entlang der Halterung, gegenüber dem ersten Teil (2a) ausgerichtet ist.

2. Schneidkopf (5) gemäß dem vorherigen Anspruch, bei dem der erste Teil (2a) des Schneidwerkzeugs (1) in zwei Abschnitte unterteilt ist, die miteinander einen stumpfen Winkel von 150-175 Grad, vorzugsweise zwischen 160-170 Grad, bilden.

3. Schneidkopf (5) gemäß einem der vorhergehenden Ansprüche, bei dem der zweite Teil (2b) des Schneidwerkzeugs (1) einen stumpfen Winkel zwischen 135-175 Grad, vorzugsweise zwischen 150-170 Grad aufweist.

4. Schneidkopf (5) gemäß den vorhergehenden Ansprüchen, bei dem der Winkel des ersten Teils (2a) des Werkzeugs (1) in entgegengesetzter Richtung zum Winkel des zweiten Teils (2b) des Werkzeugs (1) liegt.

5. Schneidkopf (5) gemäß einem der vorhergehenden Ansprüche, bei dem sich der dritte Teil (2c) der Halterung entlang des Körpers der Halterung in Richtung des Endes gegenüber dem ersten Teil (2a) verjüngt.

6. Schneidkopf (5) gemäß einem der vorhergehenden Ansprüche, bei dem das Ende des dritten Teils der Halterung abgerundet ist.

7. Schneidkopf (5) gemäß einem der vorhergehenden Ansprüche, bei dem die Aussparung eine Nut an den Seiten der Aussparung aufweist, um den abnehmbaren Schneideinsatz (4) aufzunehmen und zu fixieren.

8. Schneidkopf (5) gemäß einem der vorhergehenden Ansprüche, bei dem die Schneidkanten des Schneideinsatzes (4) gerade sind.

9. Schneidkopf (5) gemäß einem der vorhergehenden Ansprüche, bei dem der Schneideinsatz (4) aus Wolframcarbid besteht.

10. Schneidkopf (5) gemäß einem der vorhergehenden Ansprüche, bei dem die Halterung aus Stahl besteht.

11. Schneidkopf (5) gemäß einem der Ansprüche, bei dem der Schneideinsatz (4) CNC-bearbeitet und durch Drahterosion geschnitten wird.

12. Schneidkopf (5) gemäß einem der vorhergehenden Ansprüche, bei dem der Schneideinsatz (4) durch Sintern gebildet wird.

13. Schneidkopf (5) für den Vulkanisationsgrat (10) des Reifens (8), der aus einer Vielzahl von Werkzeugen besteht, wie in einem der vorhergehenden Ansprüche beschrieben, die zum Schneiden des jeweiligen Grats angeordnet sind.

14. Schneidkopf (5) für den Vulkanisationsgrat (10) des Reifens (8) gemäß dem vorherigen Anspruch, der eine Basis aufweist, auf der die Werkzeuge montiert und am Umfang verteilt sind.

15. Roboterarm mit Schneidkopf (5) für den Vulkanisationsgrat (10) des Reifens (8), gemäß Anspruch 13 oder 14, der am Roboterarm befestigt ist.

16. Roboterarm gemäß dem vorherigen Anspruch, der ein Absaugsystem für das überschüssige Polymer aufweist, das von den Werkzeugen (1) abgeschnitten wird.

17. Methode zum Schneiden des Vulkanisationsgrats (10) eines Reifens (8) bei einem Reifen-Rotationssystem außerhalb des Reifens (8), die einen Roboterarm mit einem Schneidwerkzeug (1) eines Schneidkopfes (5) gemäß den Ansprüchen 1 bis 14 umfasst, wobei die Methode aus den folgenden Schritten besteht:
Start der Reifenrotation;
Entlangziehen des Schneidwerkzeugs (1) an einer rotierenden Reifenoberfläche durch den Roboterarm, sodass der dritte Teil (2c) auf dem Reifen (8) gleitet, um den Grat (10) zu schneiden.

18. Methode zum Schneiden des Vulkanisationsgrats (10) eines Reifens (8) bei einem Reifen-Rotationssystem außerhalb des Reifens (8), die einen Roboterarm mit einem Schneidkopf (5), gemäß den Ansprüchen 1 bis 14 umfasst, wobei die Methode aus den folgenden Schritten besteht:
Start der Reifenrotation;
Annäherung des Schneidkopfs (5) durch den Roboterarm, um das Schneidwerkzeug (1) an einer rotierenden Reifenoberfläche entlangzuziehen, sodass der dritte Teil (2c) auf dem Reifen (8) gleitet, um den Grat (10) zu schneiden.

19. Methode gemäß dem vorherigen Anspruch, die im Fall eines verschlissenen Schneidwerkzeugs (1) darin besteht, den Schneidkopf (5) so zu drehen, dass das gewünschte Schneidwerkzeug (1) auf den zu schneidenden Grat ausgerichtet ist.

## Claims

1. Rotatable cutting head (5) for the vulcanization burr (10) of a tyre (8), the cutting head consisting of at least two cutting tools (1) which are arranged for cutting the respective burr (10), **characterized by** at least one cutting tool (1) for the vulcanization burr of the tyre (8), the cutting tool containing a holder for a removable cutting insert (4) and said removable cutting insert (4);
in which the holder has an elongate body (2) with a first part (2a), in order to fasten the tool to a robot arm, a second bent part, and a third part, in order to slide on the tyre (8) and to cut off the burr (10);
in which the second part (2b) connects the first part (2a) and the third part to each other;
in which the third part (2c) has a recess for receiving the removable cutting insert (4);
in which the removable cutting insert (4) has two V-shaped cutting edges in order to cut the burr (10) between said cutting edges;
in which the vertex of the "V" is aligned in a direction along the holder, opposite the first part (2a).

2. Cutting head (5) according to the preceding claim, in which the first part (2a) of the cutting tool (1) is divided into two sections, which form an obtuse angle of 150-175 degrees, preferably between 160-170 degrees, with each other.

3. Cutting head (5) according to either of the preceding claims, in which the second part (2b) of the cutting tool (1) has an obtuse angle between 135-175 degrees, preferably between 150-170 degrees.

4. Cutting head (5) according to the preceding claims, in which the angle of the first part (2a) of the tool (1) lies in the opposite direction to the angle of the second part (2b) of the tool (1).

5. Cutting head (5) according to any one of the preceding claims, in which the third part (2c) of the holder is tapered along the body of the holder in the direction of the end with respect to the first part (2a).

6. Cutting head (5) according to any one of the preceding claims, in which the end of the third part of the holder is rounded.

7. Cutting head (5) according to any one of the preceding claims, in which the recess has a groove on the sides of the recess in order to receive and to fix the removable cutting insert (4).

8. Cutting head (5) according to any one of the preceding claims, in which the cutting edges of the cutting insert (4) are straight.

9. Cutting head (5) according to any one of the preceding claims, in which the cutting insert (4) is made of tungsten carbide.

10. Cutting head (5) according to any one of the preceding claims, in which the holder is made of steel.

11. Cutting head (5) according to any one of the claims, in which the cutting insert (4) is CNC-machined and cut by wire erosion.

12. Cutting head (5) according to any one of the preceding claims, in which the cutting insert (4) is formed by sintering.

13. Cutting head (5) for the vulcanization burr (10) of the tyre (8), which cutting head consists of a multiplicity of tools as described in one of the preceding claims, which are arranged for cutting the respective burr.

14. Cutting head (5) for the vulcanization burr (10) of the tyre (8) according to the preceding claim, which cutting head has a base on which the tools are mounted and distributed on the circumference.

15. Robot arm with a cutting head (5) for the vulcanization burr (10) of the tyre (8), according to Claim 13 or 14, which cutting head is fastened to the robot arm.

16. Robot arm according to the preceding claim, which has a suction system for the excess polymer that is cut off by the tools (1).

17. Method for cutting the vulcanization burr (10) of a tyre (8) in a tyre rotation system outside the tyre (8), comprising a robot arm with a cutting tool (1) of a cutting head (5) according to Claims 1 to 14, wherein the method consists of the following steps:
starting rotation of the tyre;
pulling the cutting tool (1) along a rotating tyre surface by the robot arm such that the third part (2c) slides on the tire (8) in order to cut the burr (10).

18. Method for cutting the vulcanization burr (10) of a tyre (8) in a tyre rotation system outside the tyre (8), comprising a robot arm with a cutting head (5) according to Claims 1 to 14, wherein the method consists of the following steps:
starting rotation of the tyre;
bringing the cutting head (5) nearer by means of the robot arm in order to pull the cutting tool (1) along a rotating tyre surface such that the third part (2c) slides on the tyre (8) in order to cut the burr (10).

19. Method according to the preceding claim, which method, in the event of a worn cutting tool (1), consists in rotating the cutting head (5) in such a way that the desired cutting tool (1) is aligned with the burr to be cut.

## Revendications

1. Tête de coupe rotative (5) pour la bavure de vulcanisation (10) d'un pneumatique (8), qui se compose d'au moins deux outils de coupe (1) agencés de manière à couper la bavure (10) correspondante, **caractérisé par** au moins un outil de coupe (1) pour la bavure de vulcanisation du pneumatique (8), qui contient un support pour un insert de coupe amovible (4) et ledit insert de coupe amovible (4) ; le support présente un corps allongé (2) avec une première partie (2a) pour fixer l'outil à un bras de robot, une deuxième partie courbée et une troisième partie pour glisser sur le pneumatique (8) et couper la bavure (10) ;
la deuxième partie (2b) relie la première partie (2a) et la troisième partie l'une à l'autre ;
la troisième partie (2c) présente un évidement destiné à recevoir l'insert de coupe amovible (4) ;
l'insert de coupe amovible (4) présente deux arêtes de coupe en forme de V pour couper la bavure (10) entre lesdites arêtes de coupe ;
le sommet du « V » est orienté dans une direction le long du support, à l'opposé de la première partie (2a).

2. Tête de coupe (5) selon la revendication précédente, dans laquelle la première partie (2a) de l'outil de coupe (1) est divisée en deux sections qui forment entre elles un angle obtus de 150 à 175 degrés, de préférence entre 160 et 170 degrés.

3. Tête de coupe (5) selon l'une des revendications précédentes, dans laquelle la deuxième partie (2b) de l'outil de coupe (1) présente un angle obtus compris entre 135 et 175 degrés, de préférence entre 150 et 170 degrés.

4. Tête de coupe (5) selon les revendications précédentes, dans laquelle l'angle de la première partie (2a) de l'outil (1) est orienté dans la direction opposée à l'angle de la deuxième partie (2b) de l'outil (1).

5. Tête de coupe (5) selon l'une des revendications précédentes, dans laquelle la troisième partie (2c) du support s'amincit le long du corps du support en direction de l'extrémité opposée à la première partie (2a).

6. Tête de coupe (5) selon l'une des revendications précédentes, dans laquelle l'extrémité de la troisième partie du support est arrondie.

7. Tête de coupe (5) selon l'une des revendications précédentes, dans laquelle l'évidement présente une rainure sur les côtés de l'évidement pour recevoir et fixer l'insert de coupe amovible (4).

8. Tête de coupe (5) selon l'une des revendications précédentes, dans laquelle les arêtes de coupe de l'insert de coupe (4) sont droites.

9. Tête de coupe (5) selon l'une des revendications précédentes, dans laquelle l'insert de coupe (4) est en carbure de tungstène.

10. Tête de coupe (5) selon l'une des revendications précédentes, dans laquelle le support est en acier.

11. Tête de coupe (5) selon l'une des revendications, dans laquelle l'insert de coupe (4) est usiné par CNC, « Computer Numerical Control », « commande numérique » et est découpé par électroérosion à fil.

12. Tête de coupe (5) selon l'une des revendications précédentes, dans laquelle l'insert de coupe (4) est formé par frittage.

13. Tête de coupe (5) pour la bavure de vulcanisation (10) du pneumatique (8), qui se compose d'une pluralité d'outils, tels que décrits dans l'une des revendications précédentes, qui sont agencés pour couper la bavure respective.

14. Tête de coupe (5) pour la bavure de vulcanisation (10) du pneumatique (8) selon la revendication précédente, qui présente une base sur laquelle les outils sont montés et répartis sur la circonférence.

15. Bras de robot avec tête de coupe (5) pour la bavure de vulcanisation (10) du pneumatique (8), selon la revendication 13 ou la revendication 14, qui est fixée au bras de robot.

16. Bras de robot selon la revendication précédente, qui comporte un système d'aspiration pour le polymère excédentaire qui est coupé par les outils (1).

17. Méthode pour couper la bavure de vulcanisation (10) d'un pneumatique (8) dans un système de rotation de pneumatique à l'extérieur du pneumatique (8), comprenant un bras de robot avec un outil de coupe (1) d'une tête de coupe (5) selon les revendications 1 à 14, le procédé consistant en les étapes suivantes :
démarrage de la rotation du pneumatique ;
tirage de l'outil de coupe (1) le long d'une surface rotative du pneumatique en utilisant le bras du robot, de sorte que la troisième partie (2c) glisse sur le pneumatique (8) afin de couper la bavure (10).

18. Méthode pour couper la bavure de vulcanisation (10) d'un pneumatique (8) à l'extérieur du pneumatique (8), dans un système de rotation de pneumatique, qui comprend un bras de robot avec une tête de coupe (5), selon les revendications 1 à 14, le procédé consistant en les étapes suivantes :
démarrage de la rotation du pneumatique ;
approche de la tête de coupe (5) par le bras du robot pour tirer l'outil de coupe (1) le long d'une surface rotative du pneumatique de sorte que la troisième partie (2c) glisse sur le pneumatique (8) afin de couper la bavure (10).

19. Méthode selon la revendication précédente, qui consiste, dans le cas d'un outil de coupe (1) usé, à faire tourner la tête de coupe (5) de telle sorte que l'outil de coupe (1) souhaité soit aligné sur la bavure à couper.
